# EUROPÄISCHE PATENTSCHRIFT

(11) **EP 3 112 127 B1**
(45) Veröffentlichungstag und Bekanntmachung des Hinweises auf die Patenterteilung: **02.09.2020**
(21) Anmeldenummer: 15174774.8
(22) Anmeldetag: 01.07.2015
(51) Int. Cl.: B29C 51/08, B32B 27/12, B29C 63/00, B62D 29/04

(54) **VERFAHREN ZUR HERSTELLUNG EINES BEPLANKUNGSBAUTEILS**
METHOD FOR PRODUCING A PANELLING COMPONENT
PROCEDE DE FABRICATION D'UN COMPOSANT DE REVETEMENT

(43) Veröffentlichungstag der Anmeldung: 04.01.2017
(73) Patentinhaber: Magna Steyr Fahrzeugtechnik AG & Co KG, 8041 Graz (AT)
(72) Erfinder: HOFER, Bernhard, 8053 Graz (AT); PASSEGGER, Wolfgang, 8430 Tillmitsch (AT)
(74) Vertreter: Zangger, Bernd

(56) Entgegenhaltungen:
- DE-A1-102009 037 430
- US-A1- 2009 053 960
- US-A1- 2010 078 927

## Beschreibung

### Gebiet der Erfindung

Die vorliegende Erfindung betrifft ein Verfahren zur Herstellung eines Beplankungsbauteils.

### Stand der Technik

Beplankungsbauteile werden in der Fahrzeugherstellung, insbesondere als Kunststoffbeplankungen von Fahrzeugen wie Kraftfahrzeugen eingesetzt.

Solche Beplankungsteile werden üblicherweise durch Verfahren wie Spritzguss, als Sheet Molding Compound (SMC) oder durch Thermoformen hergestellt, wobei üblicherweise der gesamte Kunststoff durchgefärbt ist oder nachträglich eine Lackierung aufgebracht wird. Da Kunststoffe in der Regel einen höheren Wärmeausdehnungskoeffizienten aufweisen als Aluminiumbauteile, müssen bei Verwendung derartiger Kunststoffbeplankungen Füllstoffe zur Verringerung der Wärmeausdehnung eingesetzt werden und zusätzlich größere Fugen zum Toleranzausgleich vorgesehen werden.

Bei Verwendung von Presstechniken zur Herstellung der Beplankungsbauteile, die auch die Ausbildung geringerer Radien und damit gute Designbarkeit ermöglichen, müssen duroplastische und schwer recyclebare Kunststoffe eingesetzt werden. Bei der Herstellung eines Bauteils aus einer oder mehreren miteinander verpressten Lagen ist auch die Ausbildung einer Class-A Oberfläche nicht möglich, da sich üblicherweise Werkzeugoberflächen am Bauteil abzeichnen. Auch durch Aufkleben einer Oberflächen-Folie ist die Herstellung einer Class-A Oberfläche auf einem durch ein Presswerkzeug hergestelltes Bauteil nicht möglich.

Die Druckschriften US 2010/0078927 A1 und US 2009/0053960 A1 beschreiben jeweils die Herstellung eines Beplankungsbauteils für ein Kraftfahrzeug, nämlich die US 2010/0078927 A1 einer Kostflügelverkleidung und die US 2009/0053960 A1 eines Dachhimmels, wobei hier Laminate, also ein Bauteil bestehend aus mehreren miteinander verklebten Schichten in einem einzigen Schritt gepresst und somit verformt werden. Derart ist, wie bereits oben beschrieben, die Herstellung einer Class-A Oberfläche jedoch nicht möglich.

Mit manchen Herstellungsverfahren, wie dem Thermoformen, ist die Designfreiheit eingeschränkt, da kleinere Radien aufgrund der erforderlichen hohen Wandstärken nicht abgebildet werden können. Bauteile mit dünneren Wandstärken sind wiederum mechanisch labil. Zudem müssen Farben mittels aufwändiger Lackierung auf die Oberflächen aufgebracht werden.

### Zusammenfassung der Erfindung

Es ist eine Aufgabe der Erfindung, ein Verfahren zur Herstellung eines Beplankungsbauteils anzugeben, das eine einfache und kostengünstige Herstellung eines Beplankungsbauteils mit Class-A Oberfläche erlaubt.

Insbesondere soll in der Herstellung eine gute Umformbarkeit des Bauteils ermöglicht werden. Eine aufwändige Lackierung des Bauteils soll trotz gewünschter Class-A Oberfläche nicht erforderlich sein. Das Bauteil soll auch einfach recyclebar sein.

Die Lösung der Aufgabe erfolgt durch ein Verfahren zur Herstellung eines Beplankungsbauteils für ein Kraftfahrzeug, umfassend die Schritte
- Pressformen eines faserverstärkten, tragenden Verbundbauteils,
- Formen einer Folie, wobei die Folie eine Class-A Oberfläche aufweist,
- Separates Fügen des tragenden Verbundbauteils als erste Schicht und der Folie als zweite Schicht mittels eines Klebers als dazwischenliegende dritte Schicht, wobei die Folie (2) vor dem Fügen bereits die Struktur des fertigen Beplankungsbauteils aufweist.

Erfindungsgemäß wird einerseits ein tragendes Bauteil mittels Presstechnik hergestellt und andererseits eine Sichtfläche für das tragende Bauteil separat geformt, wobei die Sichtfläche bereits eine Class-A Oberfläche aufweist. Da die Sichtfläche getrennt hergestellt wird und nicht wie beispielsweise ein Laminat mitverpresst wird, kann diese bereits mit hoher Oberflächenqualität produziert werden. Durch die Klebeverbindung zwischen den beiden geformten Schichten können Bauteiltoleranzen wie Formabweichungen und Oberflächenabweichungen zwischen tragendem Verbundbauteil und vorgeformter Folie aufgenommen werden. Während der Herstellung der Klebeverbindung können die beiden Bauteile leicht aneinander gepresst werden.

Weiterbildungen der Erfindung sind in den abhängigen Ansprüchen, der Beschreibung sowie den beigefügten Zeichnungen angegeben.

Vorzugsweise wird die Folie mittels Thermoformen geformt und ist somit bevorzugt eine dünne, thermogeformte Folie mit Class-A Oberfläche. Das Thermoformen erfolgt bevorzugt in einem einseitigen Werkzeug, bei bevorzugt 175 bis 190 Grad Celsius und bei im Werkzeug ausgebildetem Vakuum.

Bevorzugt ist die Folie vor dem Fügen bereits fest und/oder abgekühlt.

Die Folie besteht vorzugsweise nur aus einer einzigen Lage und ist kein Laminat. Die Folie ist vorzugsweise ein Co-Extrudat. Die Folie kann mehrere Funktionen erfüllen.

Bevorzugt wird die Folie vollflächig mittels des Klebers mit dem tragenden Verbundbauteil verbunden. Somit werden Lufteinschlüsse zwischen den Bauteilen vermieden und die Qualität der Oberfläche erhöht.

Als Kleber können beispielsweise Schäume, wie zum Beispiel PU-Schaum oder Zwei-Komponenten-Schaum, oder auch andere zum Kleben geeignete Materialien verwendet werden, wie beispielsweise Montageklebesysteme auf PU-Basis oder auf Acrylat-Basis, Zwei-Komponentenklebstoffe, Dispersionsklebstoffe, Kontaktklebstoffe aber auch doppelseitig klebende Schaumklebebänder bzw. Schaumstoffklebebänder. Doppelseitig klebende Schaumklebebänder bzw. Schaumstoffklebebänder werden vorzugsweise großflächig, besonders bevorzugt auf im Wesentlichen planare Flächen, aber nicht vollflächig aufgetragen bzw. aufgebracht. Besonders durch die nachgiebige Schaumstoffoberfläche sind diese Klebebänder geeignet Dickenunterschiede auszugleichen und /oder eine Längsverschiebung zwischen dem Verbundbauteil und der Folie zuzulassen.

Das tragende Verbundbauteil kann vorzugsweise durch Pressen oder Fließpressen geformt werden. Das Pressen kann bevorzugt bei 240 bis 300 Grad Celsius erfolgen und unter hohem Druck.

Bevorzugt wird das tragende Verbundbauteil hergestellt, in dem mit Endlosfasern verstärktes Organoblech, also Fasern mit einer Thermoplast Matrix, unter Hitze zur gewünschten Form verpresst werden. Durch Verwendung von Endlosfasern wird eine geringere Wärmeausdehnung des Bauteiles erreicht. Die Verwendung eines Thermoplasten stellt eine gute Recyclebarkeit sicher.

Das tragende Verbundbauteil kann auch aus Endlosfasern und einem Duroplasten hergestellt sein, wobei dann eine Recyclebarkeit in der Regel nicht gegeben ist.

Bevorzugt werden sowohl das tragende Verbundbauteil als auch die Folie aus einem Thermoplast hergestellt.

Vorzugsweise wird der Kleber in einer ausreichenden Dicke aufgebracht, sodass er Bauteiltoleranzen aufnehmen kann.

Im tragenden Verbundbauteil und/oder im Kleber können Leitungen oder Kabel integriert werden.

Im Kleber können Sensoren und/oder Leuchttechnik integriert werden.

Bevorzugt ist im tragenden Verbundbauteil zumindest eine Aussparung, insbesondere für Leuchttechnik, ausgebildet.

Die Folie kann zumindest bereichsweise transparent ausgeführt sein, insbesondere in Bereichen mit darunter liegender Leuchttechnik. Die Folie kann auch ganz oder bereichsweise auf der Innenseite und/oder der Außenseite Bedruckungen oder eine Färbung aufweisen.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäß hergestellten Beplankungsbauteils.
- Fig. 2: ist eine schematische Darstellung eines Verfahrens zur Herstellung eines erfindungsgemäßen Beplankungsbauteils.
- Fig. 3: ist eine weitere schematische Darstellung eines Verfahrens zur Herstellung eines erfindungsgemäßen Beplankungsbauteils.
- Fig. 4: ist eine schematische Darstellung eines weiteren erfindungsgemäß hergestellten Beplankungsbauteils.
- Fig. 5: ist eine schematische Darstellung eines weiteren erfindungsgemäß hergestellten Beplankungsbauteils.

### Detaillierte Beschreibung der Erfindung

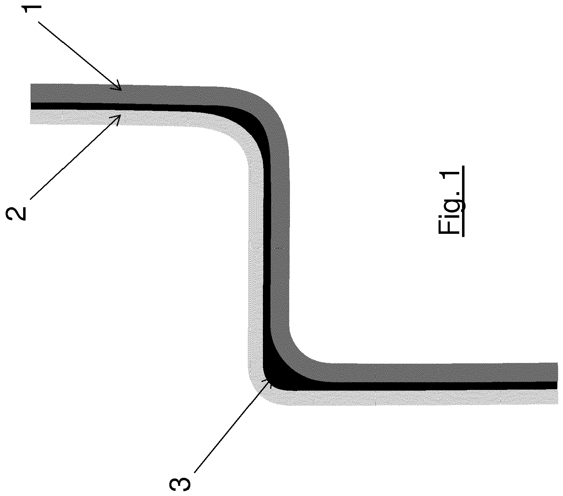

In Fig. 1 ist ein erfindungsgemäß hergestelltes Beplankungsbauteil für ein Kraftfahrzeug schematisch dargestellt, umfassend ein pressgeformtes, faserverstärktes, tragendes Verbundbauteil 1 als erste Schicht und eine vorgeformte Folie 2 als zweite Schicht, wobei die Folie eine Class-A Oberfläche aufweist, wobei zwischen tragendem Verbundbauteil 1 und Folie 2 ein Kleber 3 als dritte Schicht aufgebracht ist.

Das tragende Verbundbauteil 1 kann ein endlosfaserverstärkter Kunststoff sein, beispielsweise "Tepex GF" der Firma "Bond Laminates". Es kann ein gepresstes Bauteil sein, umfassend einen Thermoplasten und eine Faserverstärkung, beispielsweise mit Kurzfasern, Langfasern und/oder Wirrfasern. Das tragende Verbundbauteil 1 gibt zu einem großen Teil die Eigenschaften des Beplankungsbauteiles vor, wie dessen Wärmeausdehnung, E-Modul und so weiter.

Die vorgeformte Folie 2 kann eine Folie aus ABS/PC bzw. PC, beispielsweise "Senotop" der Firma "Senoplast" sein. Die Folie 1 kann transparent oder auch einseitig oder beidseitig bedruckt sein. Sie ist thermogeformt mit einem einseitigen Werkzeug.

Der Kleber 3 stellt die Verbindung zwischen dem Verbundbauteil 1 und der Folie 2 dar. Durch den Kleber 3 werden der Folie 2 Eigenschaften, insbesondere die Form des Verbundbauteils 1 aufgezwungen. Der Kleber 3 ist vollflächig aufgetragen, so dass Lufteinschlüsse zwischen Verbundbauteil 1 und Folie 2 vermieden werden. Durch den Kleber 3 können auch Toleranzen und unterschiedliche Radien der Bauteile ausgeglichen werden.

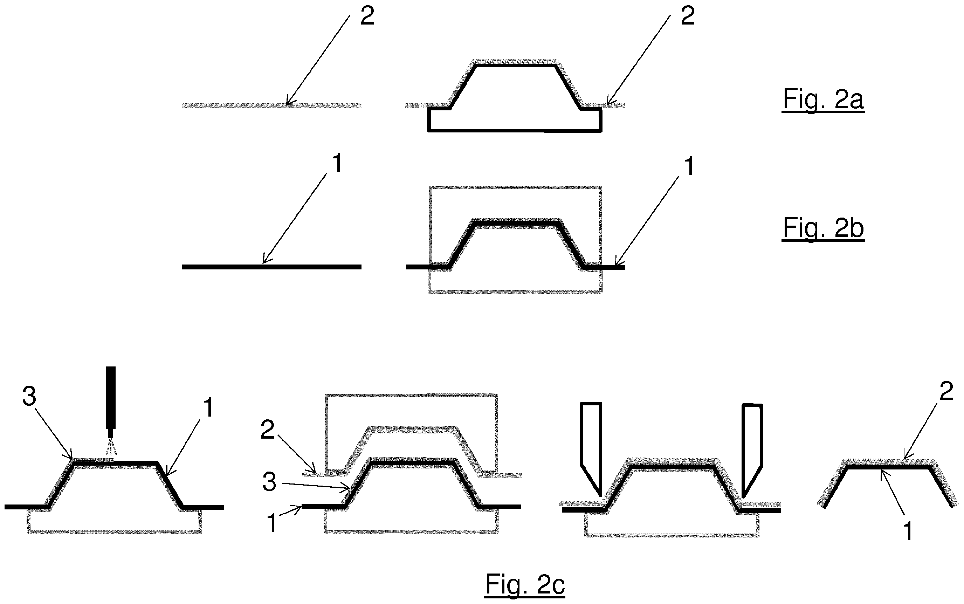

In Fig. 2 sind Schritte eines erfindungsgemäßen Verfahrens zur Herstellung eines Beplankungsbauteils dargestellt.

Fig. 2a zeigt wie eine Folie 2, die spätere Oberfläche des Beplankungsteiles, in einem Werkzeug einseitig thermogeformt wird.

Parallel dazu, gleichzeitig oder auch zeitlich versetzt, wird, wie in Fig. 2b dargestellt, in einem anderen Werkzeug das Verbundbauteil 1 gepresst.

Wie in Fig. 2c ganz links ersichtlich wird danach ein Kleber 3 auf das Verbundbauteil 1 aufgetragen, beispielsweise aufgesprüht. Danach werden die beiden Bauteile 1 und 2 miteinander leicht verpresst (zweites Bild von links) und das gefügte Bauteil beschnitten (drittes Bild von links). Das fertige Beplankungsbauteil (Bild rechts in Fig. 2c) kann geformt und mit Class-A Oberfläche versehen aus dem Werkzeug entnommen werden.

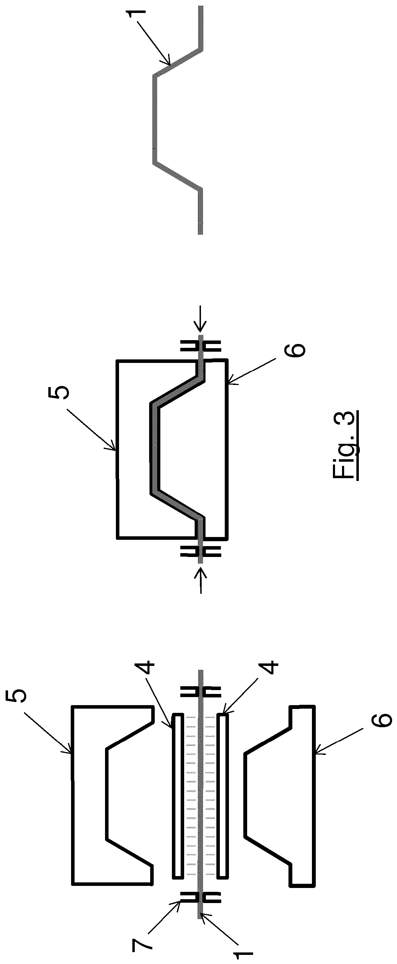

In Fig. 3 ist eine Variante eines erfindungsgemäßen Herstellungsverfahren dargestellt, in dem das tragende Verbundbauteil 1 in einer Thermoformanlage aus endlosfaserverstärktem Material mit einer thermoplastischen Matrix gebildet wird.

Wie links in der Fig. 3 dargestellt, wird das Verbundbauteil 1 als Halbzeug in die Thermoformanlage eingelegt und mit Heizstrahlern 4 beidseitig aufgeheizt, wobei die Heizstrahler 4 zwischen einer oberen Werkzeughälfte 5 und einer unteren Werkzeughälfte 6 der Thermoformanlage angeordnet sind.

In der mittleren Darstellung der Fig. 3 sind die Heizstrahler 4 zurück gefahren und die beiden Werkzeughälften 5, 6 geschlossen. Die Niederhalter 7 des Werkzeugs lassen ein Nachfließen des Materials zu.

In Fig. 3 rechts kann ein fertiges Verbundbauteil 1, geeignet zur Verbindung mit einer Folie 2, dem Werkzeug entnommen werden.

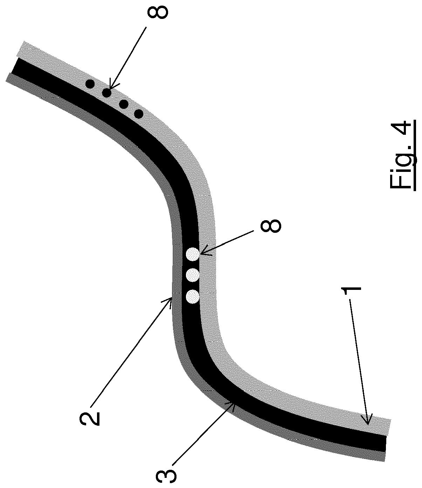

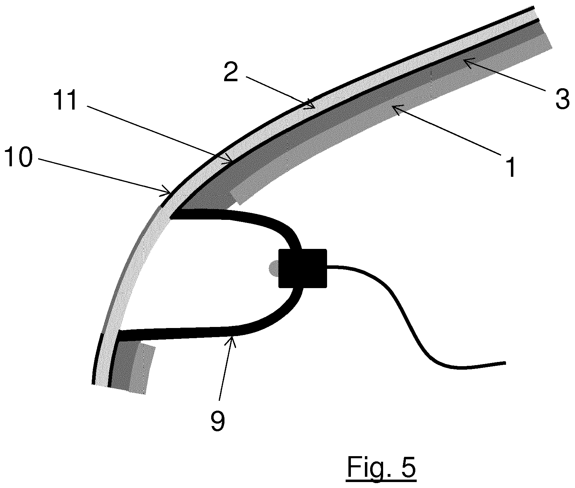

Fig. 4 und Fig. 5 stellen dar, dass in ein erfindungsgemäß hergestelltes Beplankungsbauteil auch weitere Funktionen integriert sein können. So sind im Verbundbauteil 1 und im Kleber 2 des Bauteiles gemäß Fig. 4 elektrische Leitungen 8 eingelegt.

Das tragende Verbundbauteil 1 der Fig. 5 weist eine Aussparung für Leuchttechnik 9 auf, insbesondere eine Leuchteneinheit. Die Folie 2 ist dann zumindest im Bereich über der Leuchttechnik 9 transparent ausgebildet. In Bereichen außerhalb der Leuchttechnik 9 weist die Folie 2 eine außenseitige Bedruckung 10 und/oder eine innenseitige Bedruckung 11 auf.

## Patentansprüche

1. Verfahren zur Herstellung eines Beplankungsbauteils für ein Kraftfahrzeug, umfassend die Schritte
- Pressformen eines faserverstärkten, tragenden Verbundbauteils (1),
- Separates Formen einer Folie (2), wobei die Folie (2) eine Class-A Oberfläche aufweist,
- Fügen des tragenden Verbundbauteils (1) als erste Schicht und der Folie (2) als zweite Schicht mittels eines Klebers (3) als dazwischenliegende dritte Schicht, wobei die Folie (2) vor dem Fügen bereits die Struktur des fertigen Beplankungsbauteils aufweist.

2. Verfahren nach Anspruch 1,
**dadurch gekennzeichnet, dass** die Folie (2) mittels Thermoformen geformt wird.

3. Verfahren nach Anspruch 1 oder 2,
**dadurch gekennzeichnet, dass** die Folie (2) vor dem Fügen bereits fest und/oder abgekühlt ist und/oder

4. Verfahren nach zumindest einem der vorhergehenden Ansprüche, **dadurch gekennzeichnet, dass** die Folie (2) aus einer einzigen Lage besteht und/oder ein Co-Extrudat ist.

5. Verfahren nach zumindest einem der vorhergehenden Ansprüche, **dadurch gekennzeichnet, dass** die Folie (2) vollflächig mittels des Klebers (3) mit dem tragenden Verbundbauteil (1) verbunden wird.

6. Verfahren nach zumindest einem der vorhergehenden Ansprüche, **dadurch gekennzeichnet , dass** das tragende Verbundbauteil (1) durch Pressen oder Fließpressen geformt wird.

7. Verfahren nach zumindest einem der vorhergehenden Ansprüche, **dadurch gekennzeichnet , dass** das tragende Verbundbauteil (1) hergestellt wird, in dem mit Endlosfasern verstärktes Organoblech unter Hitze zur gewünschten Form verpresst werden.

8. Verfahren nach zumindest einem der vorhergehenden Ansprüche, **dadurch gekennzeichnet , dass** das tragende Verbundbauteil (1) und die Folie (2) aus einem Thermoplast hergestellt werden.

9. Verfahren nach zumindest einem der vorhergehenden Ansprüche, **dadurch gekennzeichnet, dass** der Kleber (3) in einer ausreichenden Dicke aufgebracht wird, sodass er Bauteiltoleranzen aufnehmen kann.

10. Verfahren nach zumindest einem der vorhergehenden Ansprüche, **dadurch gekennzeichnet, dass** im tragenden Verbundbauteil (1) und/oder im Kleber (3) Leitungen (8) oder Kabel integriert werden.

11. Verfahren nach zumindest einem der vorhergehenden Ansprüche, **dadurch gekennzeichnet, dass** im Kleber (3) Sensoren und/oder Leuchttechnik (9) integriert werden.

12. Verfahren nach zumindest einem der vorhergehenden Ansprüche, **dadurch gekennzeichnet, dass** im tragenden Verbundbauteil (1) zumindest eine Aussparung, insbesondere für Leuchttechnik (9), ausgebildet wird.

13. Verfahren nach zumindest einem der vorhergehenden Ansprüche, **dadurch gekennzeichnet, dass** die Folie (2) zumindest bereichsweise transparent ausgeführt ist, insbesondere in Bereichen mit darunter liegender Leuchttechnik (9).

## Claims

1. Method for producing a panelling component for a motor vehicle, said method comprising the steps of
- press-forming a fibre-reinforced load-bearing composite component (1);
- separately forming a film (2), wherein the film (2) has a Class A surface;
- joining the load-bearing composite component (1) as a first layer and the film (2) as a second layer by means of an adhesive (3) as an interposed third layer, wherein the film (2) prior to joining already has the structure of the finished panelling component.

2. Method according to Claim 1,
**characterized in that** the film (2) is formed by means of thermoforming.

3. Method according to Claim 1 or 2,
**characterized in that** the film (2) prior to joining is already set and/or cooled and/or

4. Method according to at least one of the preceding claims,
**characterized in that** the film (2) is composed of a single ply and/or is a co-extrudate.

5. Method according to at least one of the preceding claims,
**characterized in that** the film (2) is connected to the load-bearing composite component (1) over the full area by means of the adhesive (3).

6. Method according to at least one of the preceding claims,
**characterized in that** the load-bearing composite component (1) is formed by pressing or extruding.

7. Method according to at least one of the preceding claims,
**characterized in that** the load-bearing composite component (1) is produced by pressing organosheets reinforced with continuous fibres into the desired shape under the action of heat.

8. Method according to at least one of the preceding claims,
**characterized in that** the load-bearing composite component (1) and the film (2) are produced from a thermoplastic.

9. Method according to at least one of the preceding claims,
**characterized in that** the adhesive (3) is applied in a thickness sufficient to ensure that said adhesive can accommodate component tolerances.

10. Method according to at least one of the preceding claims,
**characterized in that** leads (8) or cables are integrated into the load-bearing composite component (1) and/or in the adhesive (3).

11. Method according to at least one of the preceding claims,
**characterized in that** sensors and/or lighting systems (9) are integrated into the adhesive (3).

12. Method according to at least one of the preceding claims,
**characterized in that** at least one aperture, in particular for lighting systems (9), is configured in the load-bearing composite component (1).

13. Method according to at least one of the preceding claims,
**characterized in that** the film (2) at least in regions is embodied so as to be transparent, in particular in regions with a lighting system (9) lying therebelow.

## Revendications

1. Procédé de fabrication d'un composant de revêtement pour un véhicule automobile, comprenant les étapes consistant à
- mouler par compression un composant composite porteur (1) renforcé par des fibres,
- mouler séparément un film (2), le film (2) présentant une surface de classe A,
- assembler le composant composite porteur (1) comme première couche et le film (2) comme deuxième couche au moyen d'un adhésif (3) comme troisième couche intermédiaire, le film (2) avant assemblage présentant déjà la structure du composant de revêtement fini.

2. Procédé selon la revendication 1, **caractérisé en ce que** le film (2) est formé par thermoformage.

3. Procédé selon la revendication 1 ou 2, **caractérisé en ce que** le film (2) avant assemblage est déjà solidifié et/ou refroidi et/ou

4. Procédé selon au moins l'une des revendications précédentes, **caractérisé en ce que** le film (2) est composé d'une seule couche et/ou est un produit de coextrusion.

5. Procédé selon au moins l'une des revendications précédentes, **caractérisé en ce que** le film (2) est relié au composant composite porteur (1) sur toute la surface au moyen de l'adhésif (3).

6. Procédé selon au moins l'une des revendications précédentes, **caractérisé en ce que** le composant composite porteur (1) est formé par pressage ou par formage par fluage.

7. Procédé selon au moins l'une des revendications précédentes, **caractérisé en ce que** le composant composite porteur (1) est fabriqué **en ce qu'**une tôle organique renforcée par des fibres longues est pressée sous l'effet de la chaleur selon la forme souhaitée.

8. Procédé selon au moins l'une des revendications précédentes, **caractérisé en ce que** le composant composite porteur (1) et le film (2) sont fabriqués à partir d'une matière thermoplastique.

9. Procédé selon au moins l'une des revendications précédentes, **caractérisé en ce que** l'adhésif (3) est appliqué sur une épaisseur suffisante de façon à pouvoir absorber des tolérances du composant.

10. Procédé selon au moins l'une des revendications précédentes, **caractérisé en ce que** des conduites (8) ou des câbles sont intégré(e)s dans le composant composite porteur (1) et/ou dans l'adhésif (3).

11. Procédé selon au moins l'une des revendications précédentes, **caractérisé en ce que** des capteurs et/ou des éléments d'éclairage (9) sont intégrés dans l'adhésif (3).

12. Procédé selon au moins l'une des revendications précédentes, **caractérisé en ce qu'**au moins un évidement, en particulier pour des éléments d'éclairage (9), est réalisé dans le composant composite porteur (1).

13. Procédé selon au moins l'une des revendications précédentes, **caractérisé en ce que** le film (2) est réalisé de manière transparente au moins par endroits, en particulier dans des zones à éléments d'éclairage sous-jacents (9).
